(19) Europäisches Patentamt
European Patent Office
Office européen des brevets

(11) EP 2 351 807 A1

(12) **EUROPEAN PATENT APPLICATION**
published in accordance with Art. 153(4) EPC

(43) Date of publication:
**03.08.2011 Bulletin 2011/31**

(21) Application number: **09821955.3**

(22) Date of filing: **14.10.2009**

(51) Int Cl.:
***C09K 3/18*** *(2006.01)* ***C08F 214/06*** *(2006.01)*
***C09D 127/06*** *(2006.01)* ***C09D 129/10*** *(2006.01)*
***C09D 133/16*** *(2006.01)* ***D06M 15/256*** *(2006.01)*

(86) International application number:
**PCT/JP2009/067793**

(87) International publication number:
**WO 2010/047258 (29.04.2010 Gazette 2010/17)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.10.2008 JP 2008274756**

(71) Applicant: **Asahi Glass Company, Limited**
**Tokyo 100-8405 (JP)**

(72) Inventors:
- **OTOZAWA, Nobuyuki**
**Tokyo 100-8405 (JP)**
- **OOMORI, Yuuichi**
**Tokyo 100-8405 (JP)**
- **SHIMADA, Minako**
**Tokyo 100-8405 (JP)**
- **SHIMADA, Toyomichi**
**Tokyo 100-8405 (JP)**

(74) Representative: **Müller-Boré & Partner**
**Patentanwälte**
**Grafinger Straße 2**
**81671 München (DE)**

# (54) WATER-REPELLENT, OIL-REPELLENT AGENT COMPOSITIONS AND MANUFACTURING METHOD THEREFOR

(57) To provide a water/oil repellent composition which is capable of imparting sufficient dynamic water repellency and post-air-drying water repellency to the surface of an article and which presents a low environmental impact, and a method for its production.

A water/oil repellent composition which comprises a copolymer having structural units based on the following monomer (a), structural units based on the following monomer (b) and structural units based on the following monomer (c), and a medium, wherein the molar ratio of the structural units based on the monomer (a) to the structural units based on the monomer (b) (i.e. (a)/(b)) is at least 1:
monomer (a): vinyl chloride;
monomer (b): a vinyl ether having no polyfluoroalkyl group and having a crosslinkable functional group; and
monomer (c): a monomer having a polyfluoroalkyl group.

EP 2 351 807 A1

## Description

TECHNICAL FIELD

The present invention relates to a water/oil repellent composition and a method for its production.

BACKGROUND ART

As a method for imparting water/oil repellency to the surface of an article (such as a fiber product), a method of treating the article by means of a water/oil repellent composition composed of an emulsion having, dispersed in a medium, a copolymer having structural units based on a monomer having a polyfluoroalkyl group having at least 8 carbon atoms (a polyfluoroalkyl group will be hereinafter referred to as a $R^f$ group), has been known.

However, recently, EPA (US Environmental Protection Agency) has pointed out that a compound having a perfluoroalkyl group (a perfluoroalkyl group will be hereinafter referred to as a $R^F$ group) having at least 8 carbon atoms is likely to be decomposed in the environment or in vivo, and the decomposition product is likely to be accumulated, i.e. it presents a high environmental impact. Therefore, a copolymer for a water/oil repellent composition has been required which has structural units based on a monomer having a $R^f$ group having at most 6 carbon atoms, wherein structural units based on a monomer having a $R^F$ group having at least 8 carbon atoms are reduced as far as possible.

As a water/oil repellent composition containing such a copolymer, the following water/oil repellent composition has been, for example, proposed.

A water/oil repellent composition essentially containing a copolymer composed substantially of structural units based on the following monomer (a) and structural units based on the following monomer (b) (Patent Document 1):

Monomer (a): A monomer having a $R^F$ group having at most 6 carbon atoms or the like.
Monomer (b): A (meth)acrylate having an alkyl group having at least 15 carbon atoms or the like.

However, an article treated with such a water/oil repellent composition is insufficient in water repellency against water fallen from a height (rain fall) (hereinafter referred to as dynamic water repellency) and in water repellency after drying without forcibly heating after washing (hereinafter referred to as post-air-drying water repellency).

PRIOR ART DOCUMENT

PATENT DOCUMENT

Patent Document 1: WO002/083809

DISCLOSURE OF THE INVENTION

OBJECT TO BE ACCOMPLISHED BY THE INVENTION

It is an object of the present invention to provide a water/oil repellent composition which is capable of imparting sufficient dynamic water repellency and post-air-drying water repellency to the surface of an article and which presents a low environmental impact, and a method for its production.

MEANS TO ACCOMPLISH THE OBJECT

The water/oil repellent composition of the present invention comprises a copolymer having structural units based on the following monomer (a), structural units based on the following monomer (b) and structural units based on the following monomer (c), and a medium, wherein the molar ratio of the structural units based on the monomer (a) to the structural units based on the monomer (b) (i.e. (a)/(b)) is at least 1:

monomer (a): vinyl chloride;
monomer (b): a vinyl ether having no polyfluoroalkyl group and having a crosslinkable functional group; and
monomer (c): a monomer having a polyfluoroalkyl group.

The monomer (c) is preferably a compound represented by the following formula (1):

$$(Z\text{-}Y)_nX \qquad (1)$$

wherein Z is a $C_{1-6}$ polyfluoroalkyl group or a group represented by the following formula (2), Y is a bivalent organic group or a single bond, n is 1 or 2, and X is ,when n is 1, any one of the groups represented by the following formulae (3-1) to (3-5) and ,when n is 2, any one of the groups represented by the following formulae (4-1) to (4-4):

$$C_iF_{2i+1}O(CFX^1CF_2O)_jCFX^2\text{-} \qquad (2)$$

wherein i is an integer of from 1 to 6, j is an integer of 0 to 10, and each of $X^1$ and $X^2$ which are independent of each other is a fluorine atom or a trifluoromethyl group;

$$\text{-}CR{=}CH_2 \qquad (3\text{-}1)$$

$$\text{-}C(O)OCR{=}CH_2 \qquad (3\text{-}2)$$

$$\text{-}OC(O)CR{=}CH_2 \qquad (3\text{-}3)$$

$$\text{-}OCH_2\text{-}\phi\text{-}CR{=}CH_2 \qquad (3\text{-}4)$$

$$\text{-}OCH{=}CH_2 \qquad (3\text{-}5)$$

wherein R is a hydrogen atom, a methyl group or a halogen atom, and $\phi$ is a phenylene group;

$$\text{-}CH[\text{-}(CH_2)_mCR{=}CH_2]\text{-} \qquad (4\text{-}1)$$

$$\text{-}CH[\text{-}(CH_2)_mC(O)OCR{=}CH_2]\text{-} \qquad (4\text{-}2)$$

$$\text{-}CH[\text{-}(CH_2)_mOC(O)CR{=}CH_2]\text{-} \qquad (4\text{-}3)$$

$$\text{-}OC(O)CH{=}CHC(O)O\text{-} \qquad (4\text{-}4)$$

where R is a hydrogen atom, a methyl group or a halogen atom, and m is an integer of from 0 to 4.

The monomer (c) is preferably a (meth)acrylate having a $C_{4-6}$ perfluoroalkyl group.

The crosslinkable functional group in the monomer (b) is preferably a hydroxy group, an epoxy group or an amino group.

The copolymer preferably further has structural units based on the following monomer (d):

monomer (d): a (meth)acrylate having no polyfluoroalkyl group and having a $C_{12-30}$ alkyl group.

The copolymer preferably further has structural units based on the following monomer (e):

monomer (e): a monomer having no polyfluoroalkyl group and having a crosslinkable functional group (provided that the monomer (b) is excluded).

The method for producing a water/oil repellent composition of the present invention is a method for producing a water/oil repellent composition which comprises polymerizing a monomer mixture comprising the above monomer (a), the above monomer (b) and the above monomer (c), in a medium in the presence of a surfactant and a polymerization initiator, wherein the molar ratio of the above monomer (a) to the above monomer (b) (i.e. (a)/(b)) is at least 1.

The above monomer (c) is preferably a compound represented by the above formula (1).

The above monomer (c) is preferably a (meth)acrylate having a $C_{4-6}$ perfluoroalkyl group.

The crosslinkable functional group in the above monomer (b) is preferably a hydroxy group, an epoxy group or an amino group.

The above monomer mixture preferably further contains the above monomer (d).

The above monomer mixture preferably further contains the above monomer (e).

ADVANTAGEOUS EFFECTS OF THE INVENTION

The water/oil repellent composition of the present invention is capable of imparting sufficient dynamic water repellency and post-air-drying water repellency to the surface of an article and presents a low environmental impact.
Further, according to the method for producing a water/oil repellent composition of the present invention, it is possible to produce a water/oil repellent composition which is capable of imparting sufficient dynamic water repellency and post-air-drying water repellency to the surface of an article and which presents a low environmental impact.

BEST MODE FOR CARRYING OUT THE INVENTION

In this specification, a compound represented by the formula (1) will be referred to as a compound (1). Compounds represented by other formulae will also be referred to in the same manner. Further, in this specification, a group represented by the formula (2) will be referred to as a group (2). Groups represented by other formulae will also be referred to in the same manner. Further, a (meth)acrylate in this specification means an acrylate or a methacrylate. Further, in this specification, a monomer means a compound having a polymerizable unsaturated group. Further, in this specification, a $R^f$ group is a group having some or all of hydrogen atoms in an alkyl group substituted by fluorine atoms, and a $R^F$ group is a group having all hydrogen atoms in an alkyl group substituted by fluorine atoms.

<Water/oil repellent composition>

The water/oil repellent composition of the present invention comprises the following copolymer (A) and a medium, as essential components, and may further contain a medium, a surfactant or an additive, as the case requires.

(Copolymer (A))

Copolymer (A) has structural units based on a monomer (a), structural units based on a monomer (b) and structural units based on a monomer (c) as essential structural units, and may further have structural units based on a monomer (d), structural units based on a monomer (e) or structural units based on a monomer (f). Monomer (a):

The monomer (a) is vinyl chloride.

By having structural units based on the monomer (a), the strength of the coating film containing the copolymer (A) will be improved, and the adhesion between the coating film containing the copolymer (A) and the substrate will be improved. Monomer (b):

The monomer (b) is a vinyl ether having no $R^f$ group and having a crosslinkable functional group.

By having structural units based on the monomer (b), it is possible to obtain such characteristics that the performance is less likely to be impaired as compared with a case where an equal amount of a polar monomer having a terminal hydroxy group is incorporated, and the affinity to the substrate will be increased; and it is possible to improve the durability of the film in a case where a crosslinking agent is used in combination thereby to prevent deterioration in performance against washing or abrasion.
The crosslinkable functional group is preferably a functional group having at least one bond selected from a covalent bond, an ionic bond and a hydrogen bond, or a functional group which is capable of forming a crosslinked structure by an interaction of such a bond. Otherwise, a compound having an active organic group or an element such as hydrogen or halogen in its molecule may be employed.
Such a functional group is preferably a hydroxy group, an epoxy group, an amino group, an isocyanate group, a blocked isocyanate group, an alkoxysilyl group, an alkoxymethylamide group, a silanol group, an ammonium group, an amide group, an oxazoline group, a carboxy group, an alkenyl group or a sulfonic acid group, particularly preferably a hydroxy group, an epoxy group or an amino group.
As the monomer (b), the following compounds may be mentioned.
2-Hydroxyethyl vinyl ether, 3-hydroxypropyl vinyl ether, 2-hydroxypropyl vinyl ether, 2-hydroxyisopropyl vinyl ether, 4-hydroxybutyl vinyl ether, 4-hydroxycyclohexyl vinyl ether, 1,6-hexanediol monovinyl ether, 1,4-cyclohexanedimethanol monovinyl ether, diethylene glycol monovinyl ether, triethylene glycol monovinyl ether, dipropylene glycol monovinyl ether, vinyl glycidyl ether, 2-aminoethyl vinyl ether, 3-aminopropyl vinyl ether and 2-aminobutyl vinyl ether.

Monomer (c):

The monomer (c) is a monomer having a $R^f$ group.

The copolymer (A) exhibits excellent water repellency or water resistance even in a case where it has no structural units based on the monomer (c), but in a case where it has structural units based on the monomer (c), the hydrophobicity of the copolymer (A) will be improved, whereby better durable water-repellency is considered to be obtainable.

The monomer (c) is preferably a compound having a partial structure wherein a $C_{1-20}$ $R^f$ group or a linear or branched polyfluoroalkylene group is bonded via an oxygen atom.

However, with a view to avoiding possible inclusion of a perfluorooctanoic acid (PFOA) or the like which is considered to be adversely influential to the environment, it is preferred that the copolymer (A) does not have constituting units based on a monomer having a $R^F$ group having at least 8 carbon atoms.

The monomer (c) is particularly preferably a compound (1). Here, in the formula (1), the boundary between Z and Y is determined so that the number of carbon atoms in Z becomes smallest.

$$(Z\text{-}Y)_nX \qquad (1)$$

Z is a $C_{1-6}$ $R^f$ group (provided that the $R^f$ group may contain an etheric oxygen atom) or a group (2):

$$C_iF_{2i+1}O(CFX^1CF_2O)_jCFX^2\text{-} \qquad (2)$$

wherein i is an integer of from 1 to 6, j is an integer of 0 to 10, and each of $X^1$ and $X^2$ which are independent of each other, is a fluorine atom or a trifluoromethyl group.

The $R^f$ group is preferably a $R^F$ group. The $R^f$ group may be linear or branched, preferably linear.

Z may, for example, be the following groups:

$F(CF_2)_4$-,
$F(CF_2)_5$-,
$F(CF_2)_6$-,
$(CF_3)_2CF(CF_2)_2$-,
$C_kF_{2k+1}O[CF(CF_3)CF_2O]_h\text{-}CF(CF_3)$-, etc.

wherein k is an integer of from 1 to 6, and h is an integer of from 0 to 10.

Y is a bivalent organic group or a single bond.

The bivalent organic group is preferably an alkylene group. The alkylene group may be linear or branched. The alkylene group may have -O-, -NH-, -CO-, -S-, $-SO_2-$, $-CD^1=CD^2-$ (wherein each of $D^1$ and $D^2$ which are independent of each other, is a hydrogen atom or a methyl group), etc.

Y may, for example, be the following groups.

- $CH_2$-,
- $CH_2CH_2$-,
- $(CH_2)_3$-,
- $CH_2CH_2CH(CH_3)$-,
- $CH=CH\text{-}CH_2$-,
- $S\text{-}CH_2CH_2$-,
- $CH_2CH_2\text{-}S\text{-}CH_2CH_2$-,
- $CH_2CH_2\text{-}SO_2\text{-}CH_2CH_2$-,
- W-OC(O)NH-A-NHC(O)O-$(C_pH_{2p})$-, etc.

wherein p is an integer of from 2 to 30.

A is a symmetric alkylene group having no branch, an arylene group or an aralkylene group and is preferably $-C_6H_{12}-$, $-\phi\text{-}CH_2\text{-}\phi$-or-$\phi$-(wherein $\phi$ is a phenylene group).

W is any one of the following groups.

- $SO_2N(R^1)\text{-}C_dH_{2d}$-,
- $CONHC_dH_{2d}$-,
- $CH(R^{F1})\text{-}C_eH_{2e}$-,
- $C_qH_{2q}$-

wherein $R^1$ is a hydrogen atom or a $C_{1-4}$ alkyl group, d is an integer of from 2 to 8, $R^{F1}$ is a $C_{1-20}$ perfluoroalkyl group, e is an integer of from 0 to 6, and q is an integer of from 1 to 20. $R^{F1}$ is preferably a $C_{1-6}$ perfluoroalkyl group, more preferably a $C_4$ or $C_6$ perfluoroalkyl group.

n is 1 or 2.

X is, when n is 1, any one of groups (3-1) to (3-5) and when n is 2, any one of groups (4-1) to (4-4):

$-CR=CH_2$ (3-1)

$-C(O)OCR=CH_2$ (3-2)

$-OC(O)CR=CH_2$ (3-2)

$-OCH_2-\phi-CR=CH_2$ (3-4)

$-OCH=CH_2$ (3-5)

wherein R is a hydrogen atom, a methyl group or a halogen atom, and $\phi$ is a phenylene group.

$-CH[-(CH_2)_mCR=CH_2]-$ (4-1)

$-CH[-(CH_2)_mC(O)OCR=CH_2]-$ (4-2)

$-CH[-(CH_2)_mOC(O)CR=CH_2]-$ (4-3)

$-OC(O)CH=CHC(O)O-$ (4-4)

wherein R is a hydrogen atom, a methyl group or a halogen atom, and m is an integer of from 0 to 4.

The compound (1) is preferably a (meth)acrylate having a$C_{4-6}$ $R^f$ group from the viewpoint of e.g. the polymerizability with other monomers, the flexibility of the coating film containing the copolymer (A), the adhesion of the copolymer (A) to an article, the solubility in a medium and efficiency of the emulsion polymerization.

The compound (1) is preferably a compound wherein Z is a $C_{4-6}$ $R^F$ group, Y is a $C_{1-4}$ alkylene group, n is 1, and X is the group (3-3).

Monomer (d)

The monomer (d) is a (meth)acrylate having no $R^f$ group and having a $C_{12-30}$ alkyl group. When the alkyl group has at least 12 carbon atoms, the dynamic water repellency and the post-air-drying water repellency will be good. When the alkyl group has at most 30 carbon atoms, the melting point will be relatively low, and the handling efficiency will be good.

The monomer (d) is preferably a (meth)acrylate having a $C_{18-30}$ alkyl group, more preferably a (meth)acrylate having a $C_{20-30}$ alkyl group, further preferably stearyl (meth)acrylate or behenyl (meth)acrylate, particularly preferably behenyl acrylate. Monomer (e):

The monomer (e) is a monomer having no $R^f$ group and having a crosslinkable functional group (provided that the monomer (b) is excluded).

By having structural units based on the monomer (e), the abrasion resistance will further be improved.

The crosslinkable functional group is preferably a functional group having at least one bond selected from a covalent bond, an ionic bond and a hydrogen bond, or a functional group capable of forming a crosslinked structure by an interaction of such a bond. Otherwise, a compound having an active organic group or an element such as hydrogen or halogen in its molecule may be used.

Such a functional group is preferably a plurality of unsaturated double bonds, a hydroxy group, an isocyanate group, a blocked isocyanate group, an alkoxysilyl group, an amino group, an alkoxymethylamide group, a silanol group, an ammonium group, an amide group, an epoxy group, an oxazoline group, a carboxy group, an alkenyl group or a sulfonic acid group, particularly preferably a hydroxy group, a blocked isocyanate group, an amino group or an epoxy group.

The monomer (e) is preferably a (meth)acrylate, an acrylamide, a vinyl ether (provided that the monomer (b) is excluded), a vinyl ester or an aryl ether.

The monomer (e) may, for example, be the following compounds:

2-isocyanateethyl (meth)acrylate, 3-isocyanatepropyl (meth)acrylate, 4-isocyanatebutyl (meth)acrylate, a 2-butanoneoxime adduct of 2-isocyanateethyl (meth)acrylate, a pyrazole adduct of 2-isocyanateethyl (meth)acrylate, a 3,5-dimethylpyrazole adduct of 2-isocyanateethyl (meth)acrylate, a 3-methylpyrazole adduct of 2-isocyanateethyl (meth)acrylate, an ε-caprolactam adduct of 2-isocyanateethyl (meth)acrylate, a 2-butanoneoxime adduct of 3-isocyanatepropyl (meth)acrylate, a pyrazole adduct of 3-isocyanatepropyl (meth)acrylate.

A 3,5-dimethylpyrazole adduct of 3-isocyanatepropyl (meth)acrylate, a 3-methylpyrazole adduct of 3-isocyanatepropyl (meth)acrylate, an ε-caprolactam adduct of 3-isocyanatepropyl (meth)acrylate, a 2-butanoneoxime adduct of 4-isocyanatebutyl (meth)acrylate, a pyrazole adduct of 4-isocyanatebutyl (meth)acrylate, a 3,5-dimethylpyrazole adduct of 4-isocyanatebutyl (meth)acrylate, a 3-methylpyrazole adduct of 4-isocyanatebutyl (meth)acrylate, an ε-caprolactam adduct of 4-isocyanatebutyl (meth)acrylate.

Methoxymethyl (meth)acrylamide, ethoxymethyl (meth)acrylamide, butoxymethyl (meth)acrylamide, diacetone acrylamide, γ-methacryloyloxypropyl trimethoxysilane, trimethoxy vinyl silane, vinyl trimethoxysilane, dimethylaminoethyl (meth)acrylate, diethylaminoethyl (meth)acrylate, dimethylaminopropyl (meth)acrylate, (meth)acryloylmorpholine, (meth)acryloyloxyethyl trimethylammonium chloride, (meth)acryloyloxypropyl trimethylammonium chloride, (meth)acrylamideethyl trimethylammonium chloride, (meth)acrylamidepropyl trimethylammonium chloride, monochlorovinyl acetate, trimethoxy vinylsilane, triethoxy vinylsilane.

t-butyl (meth)acrylamide sulfonic acid, (meth)acrylamide, N-methyl (meth)acrylamide, N-methylol (meth)acrylamide, N-butoxymethyl (meth)acrylamide, diacetone (meth)acrylamide, glycidyl (meth)acrylate, 2-hydroxyethyl (meth) acrylate, 2-hydroxypropyl (meth)acrylate, 4-hydroxybutyl (meth)acrylate, 3-chloro-2-hydroxypropyl methacrylate, polyoxyalkylene glycol mono(meth)acrylate (the alkylene glycol may have one type of repeating units or may have plural types of repeating units), (meth)acrylic acid, 2-(meth)acryloyloxyethyl succinic acid, 2-(meth)acryloyloxyhexahydrophthalic acid, 2-(meth)acryloyloxyethyl acid phosphate, allyl (meth)acrylate, 2-vinyl-2-oxazoline, a polycaprolactone ester of 2-vinyl-4-methyl(2-vinyloxazoline)hydroxyethyl (meth)acrylate.

Tri(meth)allyl isocyanurate (T(M)AIC manufactured by Nippon Kasei Chemical Co., Ltd.), triallyl cyanurate (TAC manufactured by Nippon Kasei Chemical Co., Ltd.), phenylglycidylethyl acrylate tolylene diisocyanate (AT-600 manufactured by KYOEISHA CHEMICAL Co., Ltd.), 3-(methylethylketoxime)isocyanatemethyl-3,5,5-trimethylcyclohexyl (2-hydroxyethyl methacrylate) cyanate (TECHCOAT HE-6P manufactured by Kyoken Kasei), a polycaprolactone ester of hydroxyethyl (meth)acrylate (PLACCEL FA, FM series manufactured by Daicel Chemical Industries, Ltd.).

Allyl vinyl ether, 1,4-butanedioll divinyl ether, nonanediol divinyl ether, cyclohexanediol divinyl ether, cyclohexanedimethanol divinyl ether, triethylene glycol divinyl ether, trimethylolpropane trivinyl ether, or pentaerythritol tetravinyl ether.

Allyl alcohol, allyloxy ethanol, allyl glycidyl ether, allyl 2,3-dihydroxypropyl ether, ADEKA REASOAP ER-10, ER-20, ER-30, ER-40 (manufactured by ADEKA), Acualon RN-10, RN-20, RN-30, RN-50, RN2025 (manufactured by Dai-ichi Kogyo Seiyaku Co., Ltd.).

The monomer (e) is preferably N-methylol (meth)acrylamide, 2-hydroxyethyl (meth)acrylate, glycidyl (meth) acrylate, 3-chloro-2-hydroxypropyl methacrylate, or a polycaprolactone ester of hydroxyethyl (meth)acrylate (PLACCEL FA or FM-series manufactured by Daicel Chemical Industries, Ltd.).

Monomer (f):

The monomer (f) is a monomer other than the monomers (a), (b), (c), (d) and (e).

The monomer (f) may, for example, be the following compounds.

Methyl (meth)acrylate, ethyl (meth)acrylate, propyl (meth)acrylate, butyl (meth)acrylate, cyclohexyl (meth)acrylate, 2-ethylhexyl (meth)acrylate, n-hexyl (meth)acrylate, benzyl (meth)acrylate, octyl (meth)acrylate, decyl methacrylate, 3-ethoxypropyl acrylate, methoxy-butyl acrylate, 2-ethylbutyl acrylate, 1,3-dimethylbutyl acrylate, 2-methylpentyl acrylate.

Vinyl acetate, vinyl propionate, butene, isoprene, butadiene, ethylene, propylene, vinyl ethylene, pentene, ethyl-2-propylene, butylethylene, cyclohexylpropylene ethylene, decylethylene, dodecylethylene, hexene, isohexylethylene, neopentylethylene, (1,2-diethoxycarbonyl)ethylene, (1,2-dipropoxycarbonyl)ethylene, methoxyethylene, ethoxyethylene, butoxyethylene, 2-methoxypropylene, pentyloxyethylene, cyclopentanoyloxyethylene, cyclopentylacetoxyethylene, styrene, a-methylstyrene, p-methylstyrene, hexylstyrene, octylstyrene, nonylstyrene, vinylidene fluoride, vinylidene chloride.

n-propyl vinyl ether, isopropyl vinyl ether, n-butyl vinyl ether, isobutyl vinyl ether, 2-ethylhexyl vinyl ether, octadecyl vinyl ether, cyclohexyl vinyl ether.

N,N-dimethyl (meth)acrylamide, vinyl alkyl ether, halogenated alkyl vinyl ether, vinyl alkyl ketone, aziridinylethyl (meth)acrylate, 2-ethylhexyloplyoxyalkylene (meth)acrylate, polyoxyalkylene (meth)acrylate.

Crotonic acid alkylester, maleic acid alkylester, fumaric acid alkylester, citraconic acid alkylester, mesaconic

acid alkylester, triallyl cyanurate, allyl acetate, N-vinylcarbazole, maleimide, N-methylmaleimide, (meth)acrylate having silicone in its side chain, a (meth)acrylate having a urethane bond, a (meth)acrylate having a polyoxyalkylene chain having a $C_{1-4}$ alkyl group at its terminal, an alkylene di(meth)acrylate.

The molar ratio of the structural units based on the monomer (a) to the structural units based on the monomer (b) (i.e. (a)/(b)) is at least 1, preferably at least 1.2, particularly preferably at least 1.5. When such a ratio is at least 1, both the dynamic water repellency and the post-air-drying water repellency will be satisfied.

The proportion of the structural units based on the monomer (a) is preferably from 5 to 60 mass%, more preferably from 5 to 50 mass%, particularly preferably from 5 to 40 mass%, based on the structural units (100 mass%) based on all monomer units, from the viewpoint of the dynamic water repellency and the post-air-drying water repellency.

The proportion of the structural units based on the monomer (b) is preferably from 0.1 to 30 mass%, more preferably from 0.1 to 25 mass%, particularly preferably from 0.5 to 20 mass%, based on the structural units (100 mass%) based on all monomers, from the viewpoint of the dynamic water repellency and the post-air-drying water repellency.

The proportion of the structural units based on the monomer (c) is preferably more than 0 mass%, more preferably from 1 to 95 mass%, further preferably from 5 to 80 mass%, particularly preferably from 10 to 70 mass%, based on the structural units (100 mass%) based on all monomers, from such a viewpoint that the hydrophobicity of the copolymer (A) will be improved, and superior durable water repellency can be obtained.

The proportion of the constituting units based on the monomer (d) is preferably from 0 to 80 mass%, based on the structural units (100 mass%) based on all monomers, and from the viewpoint of the dynamic water repellency and the post-air-drying water repellency, it is more preferably from 5 to 80 mass%, particularly preferably from 10 to 70 mass%.

The proportion of the structural units based on the monomer (e) is preferably from 0 to 20 mass% based on the structural units (100 mass%) based on all monomers, and from the viewpoint of the abrasion resistance, it is more preferably from 0.1 to 15 mass%, particularly preferably from 0.5 to 10 mass%.

The proportion of the structural units based on the monomer (f) is preferably from 0 to 30 mass%, more preferably from 0 to 20 mass%, based on the structural units (100 mass%) based on all monomers.

In a case where the proportion of the structural units based on the monomer (a) is at least 30 mass%, the mass ratio of the proportion of the structural units based on the monomer (c)/the proportion of the structural units based on the monomer (b) is preferably from 0 to 2, more preferably from 0 to 1.

In a case where the proportion of the structural units based on the monomer (a) is less than 30 mass%, the mass ratio of the proportion of the structural units based on the monomer (c)/the proportion of the structural units based on the monomer (b) is preferably more than 0.05 and at most 30, more preferably more than 0.1 and at most 25.

In the present invention, the proportion of the structural units based on a monomer is obtained by the NMR (nuclear magnetic resonance) analysis and the elemental analysis. In a case where it cannot be obtained by the NMR analysis and the elemental analysis, it may be calculated, based on the charged amount of the monomer at the time of the production of a water/oil repellent composition.

The mass average molecular weight (Mw) of the copolymer (A) is preferably from 1,000 to 1,000,000, particularly preferably from 3,000 to 1,000,000.

The mass average molecular weight (Mw) of the copolymer (A) is a molecular weight calculated as polystyrene, as measured by gel permeation chromatography (GPC).

(Medium)

The medium may, for example, be water, an alcohol, a glycol, a glycol ether, a halogenated compound, a hydrocarbon, a ketone, an ester, an ether, a nitrogen compound, a sulfur compound, an inorganic solvent or an organic acid. Among them, at least one medium selected from the group consisting of water, an alcohol, a glycol, a glycol ether and a glycol ester is preferred from the viewpoint of the dissolving power and the handling efficiency.

The alcohol may, for example, be methanol, ethanol, 1-propanol, 2-propanol, 1-butanol, 2-butanol, 2-methylpropanol, 1,1-dimethylethanol, 1-pentanol, 2-pentanol, 3-pentanol, 2-methyl-1-butanol, 3-methyl-1-butanol, 1,1-dimethylpropanol, 3-methyl-2-butanol, 1,2-dimethylpropanol, 1-hexanol, 2-methyl-1-pentanol, 4-methyl-2-pentanol, 2-ethyl-1-butanol, 1-heptanol, 2-heptanol, 3-heptanol or 1,4-butanediol.

The glycol and the glycol ether may, for example, be ethylene glycol, ethylene glycol monomethyl ether, ethylene glycol monoethyl ether, ethylene glycol monobutyl ether, ethylene glycol monomethyl ether acetate, ethylene glycol monoethyl ether acetate, ethylene glycol monobutyl ether acetate, propylene glycol, glycol ether such as propylene glycol monomethyl ether, propylene glycol monoethyl ether, propylene glycol dimethyl ether, dipropylene glycol, dipropylene glycol monomethyl ether, dipropylene glycol dimethyl ether, dipropylene glycol monoethyl ether, tripropylene glycol, tripropylene glycol monomethyl ether, polypropylene glycol or hexylene glycol.

The halogenated compound may, for example, be a halogenated hydrocarbon or a halogenated ether.

The halogenated hydrocarbon may, for example, be a hydrochlorofluorocarbon, a hydrofluorocarbon or a hydrobromocarbon.

The halogenated ether may, for example, be a hydrofluoroether.

The hydrofluoroether may, for example, be a separation-type hydrofluoroether or a non-separation-type hydrofluoroether. The separation-type hydrofluoroether is a compound wherein a $R^F$ group or a perfluoroalkylene group, and an alkyl group or an alkylene group, are bonded via an etheric oxygen atom. The non-separation-type hydrofluoroether is a hydrofluoroether containing a partially fluorinated alkyl or alkylene group.

The hydrocarbon may, for example, be an aliphatic hydrocarbon, an alicyclic hydrocarbon or an aromatic hydrocarbon.

The aliphatic hydrocarbon may, for example, be pentane, 2-methylbutane, 3-methylpentane, hexane, 2,2-dimethylbutane, 2,3-dimethylbutane, heptane, octane, 2,2,4-trimethylpentane, 2,2,3-trimethylhexane, decane, undecane, dodencane 2,2,4,6,6-pentamethylheptane, tridecane, tetradecane or hexadecane.

The alicyclic hydrocarbon may, for example, be cyclopentane, methylcyclopentane, cyclohexane, methylcyclohexane or ethylcyclohexane.

The aromatic hydrocarbon may, for example, be benzene, toluene or xylene. The ketone may, for example, be acetone, methyl ethyl ketone, 2-pentanone, 3-pentanone, 2-hexanone or methyl isobutyl ketone.

The ester may, for example, be methyl acetate, ethyl acetate, butyl acetate, methyl propionate, methyl lactate, ethyl lactate or pentyl lactate.

The ether may, for example, be diisopropyl ether, dioxane or tetrahydrofuran (hereinafter referred to as THF).

The nitrogen compound may, for example, be pyridine, N,N-dimethylformamide, N,N-dimethylacetamide or N-methylpyrrolidone.

The sulfur compound may, for example, be dimethylsulfoxide or sulfolane.

The inorganic solvent may, for example, be liquefied carbon dioxide.

The organic acid may, for example, be acetic acid, propionic acid, malic acid or lactic acid.

As the medium, one type may be used alone, or two or more types may be used as mixed. In a case where the medium is used as a mixture of two or more types, it is preferred to use it as mixed with water. By using a mixed medium, it is easy to control the solubility or dispersibility of the copolymer (A) and to adjust the penetrating property to an article, the wettability, the solvent-drying rate, etc. during the processing.

(Surfactant)

The surfactant may, for example, be a hydrocarbon type surfactant or a fluorinated surfactant, and each of which may, for example, be an anionic surfactant, a nonionic surfactant, a cationic surfactant, or an amphoteric surfactant.

As the surfactant, from the viewpoint of the dispersion stability, it is preferred to use a nonionic surfactant and a cationic surfactant or an amphoteric surfactant in combination or to use an anionic surfactant alone, and it is more preferred to use a nonionic surfactant and a cationic surfactant in combination.

The ratio of the nonionic surfactant to the cationic surfactant (nonionic surfactant/cationic surfactant) is preferably from 97/3 to 40/60 (mass ratio), more preferably from 90/3 to 40/60, further preferably from 85/3 to 40/60.

In a specific combination of a nonionic surfactant and a cationic surfactant, it is possible to reduce the total amount of the surfactants to a level of at most 5 mass% based on the copolymer (A) (100 mass%), whereby an adverse effect to the water repellency of an article can be reduced.

The nonionic surfactant is preferably at least one member selected from the group consisting of surfactants $s^1$ to $s^6$.

Surfactant $s^1$:

Surfactant $s^1$ is a polyoxyalkylene monoalkyl ether, a polyoxyalkylene monoalkenyl ether, a polyoxyalkylene monoalkapolyenyl ether or a polyoxyalkylene monopolyfluoroalkyl ether.

Surfactant $s^1$ is preferably a polyoxyalkylene monoalkyl ether, a polyoxyalkylene monoalkenyl ether or a polyoxyalkylene monopolyfluoroalkyl ether. As surfactant $s^1$, one type may be used alone, or two or more types may be used in combination.

As the alkyl, alkenyl, alkapolyenyl or polyfluoroalkyl group (hereinafter the alkyl, alkenyl, alkapolyenyl and polyfluoroalkyl groups may generally be referred to as a $R^s$ group), a $C_{4-26}$ group is preferred. The $R^s$ group may be linear or branched. The branched $R^s$ group is preferably a secondary alkyl group, a secondary alkenyl group or a secondary alkapolyenyl group. The $R^s$ group may have some or all of hydrogen atoms substituted by fluorine atoms.

A specific example of the $R^s$ group may, for example, be an octyl group, a dodecyl group, a tetradecyl group, a hexadecyl group, a stearyl group (an octadecyl group), a behenyl group (a docosyl group), an oleyl group (a 9-octadecenyl group), a heptadecylfluorooctyl group, a tridecylfluorohexyl group, a 1 H, 1 H,2H,2H-tridecylfluorooctyl group or a 1 H, H,2H,2H-nonafluorohexyl group.

The polyoxyalkylene (hereinafter referred to as POA) chain is preferably a chain wherein at least two of a

polyoxyethylene (hereinafter referred to as POE) chain and/or a polyoxypropylene (hereinafter referred to as POP) chain are linked. The POA chain may be a chain composed of one type of POA chain or a chain composed of two or more types of POA chains. When it is composed of two or more types of POA chains, the respective POA chains are preferably linked in a block form.

Surfactant $S_1$ is more preferably a compound ($s_{11}$).

$$R^{10}O[CH_2CH(CH_3)O]_s\text{-}(CH_2CH_2CO)_rH \qquad (s^{11})$$

wherein $R^{10}$ is an alkyl group having at least 8 carbon atoms or an alkenyl group having at least 8 carbon atoms, r is an integer of from 5 to 50, and s is an integer of from 0 to 20. $R^{10}$ may be one wherein some of hydrogen atoms are substituted by fluorine atoms.

When r is at least 5, the surfactant becomes soluble in water and will be uniformly dissolved in an aqueous medium, whereby the penetrating property of the water/oil repellent composition to an article will be good. When r is at most 50, hydrophilicity will be suppressed, and the water repellency will be good.

When s is at most 20, the surfactant becomes soluble in water and will be uniformly dissolved in an aqueous medium, whereby the penetrating property of the water/oil repellent composition to an article will be good.

In a case where r and s are at least 2, the POE chains and the POP chains will be linked in a block form.

$R^{10}$ is preferably linear or branched.

r is preferably an integer of from 10 to 30.

s is preferably an integer of from 0 to 10.

The compound ($s^{11}$) may, for example, be the following compounds, whereby the POE chains and the POP chains are linked in a block form.

$C_{18}H_{37}O[CH_2CH(CH_3)O]_2\text{-}(CH_2CH_2O)_3OH$,
$C_{18}H_{35}O\text{-}(CH_2CH_2O)_{30}H$,
$C_{16}H_{33}O[CH_2CH(CH_3)O]_5\text{-}(CH_2CH_2O)_{20}H$,
$C_{12}H_{25}O[CH_2CH(CH_3)O]_2\text{-}(CH_2CH_2O)_{15}H$,
$(C_8H_{17})(C_6H_{13})CHO\text{-}(CH_2CH_2O)_{15}H$,
$C_{10}H_{21}O[CH_2CH(CH_3)O]_2\text{-}(CH_2CH_2O)_{15}H$,
$C_6F_{13}CH_2CH_2O\text{-}(CH_2CH_2O)_{15}H$,
$C_6F_{13}CH_2CH_2O[CH_2CH(CH_3)O]_2\text{-}(CH_2CH_2O)_{15}H$,
$C_4F_9CH_2CH_2O[CH_2CH(CH_3)O]_2\text{-}(CH_2CH_2O)_{15}H$.

Surfactant $s^2$:

Surfactant $s^2$ is a nonionic surfactant made of a compound having at least one carbon-carbon triple bond and at least one hydroxy group in its molecule.

Surfactant $s^2$ is preferably a nonionic surfactant made of a compound having one carbon-carbon triple bond and one or two hydroxy groups in its molecule.

Surfactant $s^2$ may have a POA chain in its molecule. The POA chain may be a POE chain, a POP chain, a chain wherein a POE chain and a POP chain are randomly linked, or a chain wherein a POE chain and a POP chain are linked in a block form.

Surfactant $s^2$ is preferably compounds ($s^{21}$) to ($s^{24}$).

$$HO\text{-}C(R^{11})(R^{12})\text{-}C{\equiv}C\text{-}(CR^{13})(R^{14})\text{-}OH \qquad (s^{21})$$

$$HO\text{-}(A^1O)_u\text{-}(CR^{11})(R^{12})\text{-}C{\equiv}C\text{-}C(R^{13})(R^{14})\text{-}(OA^2)_v\text{-}OH \qquad (s^{22})$$

$$HO\text{-}C(R^{15})(R^{16})\text{-}C{\equiv}C\text{-}H \qquad (s^{23})$$

$$HO\text{-}(A^30)_w\text{-}C(R^{15})(R^{16})\text{-}C{=}C\text{-}H \qquad (s^{24})$$

Each of $A^1$ to $A^3$ which are independent of one another, is an alkylene group.

Each of u and v which are independent of each other, is an integer of at least 0, and (u+v) is an integer of at least 1.

w is an integer of at least 1.

In a case where each of u, v and w is at least 2, each of $A^1$ to $A^3$ may be the same or different.

The POA chain is preferably a POE chain, a POP chain or a chain containing a POE chain and a POP chain. The number of repeating units of the POA chain is preferably from 1 to 50.

Each of $R^{11}$ to $R^{16}$ which are independent of one another, is a hydrogen atom or an alkyl group.
The alkyl group is preferably a $C_{1-12}$ alkyl group, more preferably a $C_{1-4}$ alkyl group. The alkyl group may, for example, be a methyl group, an ethyl group, a propyl group, a butyl group or an isobutyl group.
The compound ($S^{22}$) is preferably a compound ($s^{25}$):

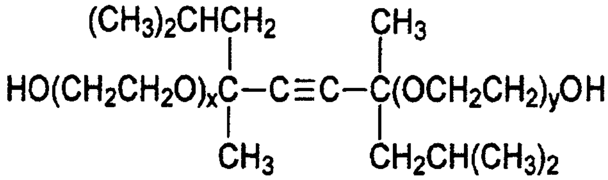

($s^{25}$)

wherein each of x and y is an integer of from 0 to 100.
As the compound ($s^{25}$), one type may be used alone, or two or more type may be used in combination.
The compound ($s^{25}$) is preferably a compound wherein x and y are 0, a compound wherein the sum of x and y is from 1 to 4 on average, or a compound wherein the sum of x and y is from 10 to 30 on average.

Surfactant $s^3$:

Surfactant $s^3$ is a nonionic surfactant made of a compound wherein a POE chain and a POA chain having at least two oxyalkylenes having at least 3 carbon atoms continuously linked, are linked, and both terminals are hydroxy groups.
Such a POA chain is preferably polyoxytetramethylene (hereinafter referred to as POT) and/or a POP chain.
Surfactant $s^3$ is preferably a compound ($s^{31}$) or a compound ($s^{32}$):

$$HO(CH_2CH_2O)_{g1}(C_3H_6O)_t(CH_2CH_2O)_{g2}H \qquad (s^{31})$$

$$HO(CH_2CH_2O)_{g1}(CH_2CH_2CH_2CH_2O)_t(CH_2CH_2O)_{g2}H \qquad (s^{32})$$

g1 is an integer of from 0 to 200.
t is an integer of from 2 to 100.
g2 is an integer of from 0 to 200.
When g1 is 0, g2 is an integer of at least 2. When g2 is 0, g1 is an integer of at least 2.

- $C_3H_6O$- may be $-CH(CH_3)CH_2O-$, $-CH_2CH(CH_3)O-$, or a mixture of $-CH(CH_3)CH_2O-$ and $-CH_2CH(CH_3)O-$.

The POA chain is in a block-form.
Surfactant $s^3$ may, for example, be the following compounds:

$HO-(CH_2CH_2O)_{15}-(C_3H_6O)_{35}-(CH_2CH_2O)_{15}H$,
$HO-(CH_2CH_2O)_8-(C_3H_6O)_{35}-(CH_2CH_2O)_8H$,
$HO-(CH_2CH_2O)_{45}-(C_3H_6O)_{17}-(CH_2CH_2O)_{45}H$,
$HO-(CH_2CH_2O)_{34}-(CH_2CH_2CH_2CH_2O)_{28}-(CH_2CH_2O)_{34}H$.

Surfactant $s^4$:

Surfactant $s^4$ is a nonionic surfactant having an amine oxide moiety in its molecule.
Surfactant $s^4$ is preferably a compound ($s^{41}$):

$$(R^{17})(R^{18})(R^{19})N(\rightarrow O) \qquad (s^{41})$$

Each of $R^{17}$ to $R^{19}$ which are independent of one another, is a monovalent hydrocarbon group.
In the present invention, a surfactant having an amine oxide ($N\rightarrow O$) is regarded as a nonionic surfactant.
As the compound ($s^{41}$), one type may be used alone, or two or more types may be used in combination.
The compound ($s^{41}$) is preferably a compound ($s^{42}$) from the viewpoint of the dispersion stability of the copolymer (A).

$(R^{20})(CH_3)_2N(\rightarrow O)$ (s[42])

$R^{20}$ is a $C_{6-22}$ alkyl group, a $C_{6-22}$ alkenyl group, a phenyl group having a $C_{6-22}$ alkyl group bonded thereto, a phenyl group having a $C_{6-22}$ alkenyl group bonded thereto, or a $C_{6-13}$ fluoroalkyl group. $R^{20}$ is preferably a $C_{8-22}$ alkyl group, a $C_{8-22}$ alkenyl group or a $C_{4-9}$ polyfluoroalkyl group.
The compound (s[42]) may, for example, be the following compounds:

$[H(CH_2)_{12}](CH_3)_2N(\rightarrow O)$,
$[H(CH_2)_{14}](CH_3)_2N(\rightarrow O)$,
$[H(CH_2)_{16}](CH_3)_2N(\rightarrow O)$,
$[H(CH_2)_{18}](CH_3)_2N(\rightarrow O)$,
$[F(CF_2)_6(CH_2)_{21}(CH_3)_2N(,O)$,
$[F(CF_2)_4(CH_2)_2](CH_3)_2N(\rightarrow O)$.

Surfactant $s^5$:

Surfactant $s^5$ is a nonionic surfactant made of a polyoxyethylene mono(substituted phenyl) ether or its condensate.
The substituted phenyl group is preferably a phenyl group substituted by a monovalent hydrocarbon group, more preferably a phenyl group substituted by an alkyl group, an alkenyl group or a styryl group.
Surfactant $s^5$ is preferably a condensate of a polyoxyethylenemono(alkylphenyl) ether, a condensate of a polyoxethylenemono(alkenylphenyl) ether, a polyoxyethylenemono(alkylphenyl) ether, a polyoxyethylenemono(alkenylphenyl) ether or a polyoxyethylenemono[(alkyl)(styryl)phenyl] ether.
The polyoxyethylenemono(substituted phenyl) ether or its condensate may, for example, be a formaldehyde condensate of polyoxyethylenemono(nonylphenyl) ether, polyoxyethylenemono(nonylphenyl) ether, polyoxyethylenemono(octylphenyl) ether, polyoxyethylenemono(oleylphenyl) ether, polyoxyethylenemono[(nonyl)(styryl)phenyl] ether or polyoxyethylenemono[(oleyl)(styryl)phenyl] ether.

Surfactant $s^6$:

Surfactant $s^6$ is a nonionic surfactant made of a fatty acid ester or a polyol.
The polyol represents glycerol, sorbitan, sorbit, polyglycerin, polyethylene glycol, polyoxyethylene glyceryl ether, polyoxyethylenesorbitan ether or polyoxyethylenesorbit ether.
Surfactant $s^6$ may be a 1:1 (molar ratio) ester of stearic acid and polyethylene glycol, a 1:4 (molar ratio) ester of an ether of sorbit with polyethylene glycol and oleic acid, a 1:1 (molar ratio) ester of an ether of polyoxyethylene glycol with sorbitan and stearic acid, a 1:1 (molar ratio) ester of an ether of polyethylene glycol with sorbitan and oleic acid, a 1:1 (molar ratio) ester of dodecanoic acid and sorbitan, a 1:1 or 2:1 (molar ratio) ester of oleic acid and decaglycerol, or a 1:1 or 2:1 (molar ratio) ester of stearic acid and decaglycerol.

Surfactant $s^7$:

In a case where the surfactant contains a cationic surfactant, such a cationic surfactant is preferably surfactant $s^7$.
Surfactant $s^7$ is a cationic surfactant in a substituted ammonium salt form.
Surfactant $s^7$ is preferably an ammonium salt having at least one hydrogen atom bonded to the nitrogen atom substituted by an alkyl group, an alkenyl group or a POA chain having a terminal hydroxy group, more preferably a compound (s[71]):

$[(R^{21})_4N^+]\cdot X^-$ (s[71])

$R^{21}$ is a hydrogen atom, a $C_{1-22}$ alkyl group, a $C_{2-22}$ alkenyl group, a $C_{1-9}$ fluoroalkyl group or a POA chain having a terminal hydroxy group. Four $R^{21}$ may be the same or different, provided that the four $R^{21}$ are not simultaneously hydrogen atoms.
$R^{21}$ is preferably a $C_{6-22}$ long chain alkyl group, a $C_{6-22}$ long chain alkenyl group or a $C_{1-9}$ fluoroalkyl group.
In a case where $R^{21}$ is an alkyl group other than the long chain alkyl group, $R^{21}$ is preferably a methyl group or an ethyl group.
In a case where $R^{21}$ is a POA chain having a terminal hydroxy group, the POA chain is preferably a POE chain.
$X^-$ is a counter ion.

$X^-$ is preferably a chlorine ion, an ethylsulfuric acid ion or an acetic acid ion.
The compound ($s^{71}$) may, for example, be monostearyl trimethylammonium chloride, monostearyldimethylmonoethylammonium ethylsulfate, mono(stearyl)monomethyldi(polyethylene)glycol ammonium chloride, monofluorohexyl trimethylammonium chloride, di(beef tallow alkyl)dimethylammonium chloride or dimethylmonococonutamine acetate.

Surfactant $s^8$:

In a case where the surfactant contains an amphoteric surfactant, such an amphoteric surfactant is preferably surfactant $s^8$.
Surfactant $s^8$ is an alanine, an imidazolium betain, an amide betain or an acetic acid betain.
The hydrophobic group is preferably a $C_{6-22}$ long chain alkyl group, a $C_{6-22}$ long chain alkenyl group or a $C_{1-9}$ fluoroalkyl group.
Surfactant $s^8$ may, for example, be dodecyl betain, stearyl betain, dodecylcarboxymethylhydroxyethylimidazolium betain, dodecyldimethylaminoacetic acid betain or a fatty acid amide propyldimethylaminoacetic acid betain.

Surfactant $s^9$:

As the surfactant, surfactant $s^9$ may be used.
Surfactant $s^9$ is a polymer surfactant made of a block copolymer or a random copolymer of a hydrophilic monomer with a hydrocarbon type hydrophobic monomer and/or a fluorinated hydrophobic monomer, or a hydrophobically modified product of a hydrophilic copolymer.
Surfactant $s^9$ may, for example, be a block or random copolymer of polyethylene glycol (meth)acrylate with a long chain alkyl acrylate, a block or random copolymer of polyethylene glycol (meth)acrylate with a fluoro(meth)acrylate, a block or random copolymer of vinyl acetate with a long chain alkyl vinyl ether, a block or random copolymer of vinyl acetate with a long chain alkyl vinyl ester, a polymer of styrene with maleic anhydride, a condensate of polyvinyl alcohol with stearic acid, a condensate of polyvinyl alcohol with stearyl mercaptan, a condensate of polyallylamine with stearic acid, a condensate of polyethyleneimine with stearyl alcohol, methylcellulose, hydroxypropyl methylcellulose or hydroxyethyl methylcellulose.
Commercial products of surfactant $s^9$ include, for example, MP polymer (Product No.: MP-103 or MP-203) manufactured by Kuraray corporation, SMA resins manufactured by Elf Atochem Inc, METOLOSE manufactured by Shin-Etsu Chemical Co., Ltd., EPOMIN RP manufactured by NIPPON SHOKUBAI Co., Ltd. and Surflon (Product No.: S-381 or S-393) manufactured by AGC Seimi Chemical Co., Ltd.
In a case where the medium is an organic solvent, or the mixing ratio of an organic solvent is large, surfactant $s^9$ is preferably surfactant $s^{91}$.
Surfactant $s^{91}$: A polymer surfactant made of a block copolymer or random copolymer of a lipophilic monomer with a fluorinated monomer (or its polyfluoroalkyl modified product).
Surfactant $s^{91}$ may, for example, be a copolymer of an alkyl acrylate with a fluoro(meth)acrylate, or a copolymer of an alkyl vinyl ether with a fluoroakyl vinyl ether.
Commercial products of surfactant $s^{91}$ include, for example, Surflon (Product No.: S-383 or SC-100 series) manufactured by AGC Seimi Chemical Co., Ltd.
As a combination of surfactants, from the viewpoint of excellent water repellency and durability of a water/oil repellent composition, and from the viewpoint of the stability of the obtained emulsion, a combination of surfactants $s^1$, $s^2$ and $s^7$, a combination of surfactants $s^1$, $s^3$ and $s^7$ or a combination of surfactants $s^1$, $s^2$, $s^3$ and $s^7$ is preferred, and such a combination wherein the surfactant $s^7$ is a compound ($s^{71}$) is more preferred.
The total amount of surfactants is preferably from 1 to 10 parts by mass, more preferably from 1 to 7 parts by mass, based on the copolymer (A) (100 parts by mass).

(Additives)

The additives include, for example, a penetrant, a defoamer, a water-absorbing agent, an antistatic agent, an antistatic polymer, an anticrease agent, a texture-adjusting agent, a film-forming assistant, a water-soluble polymer (such as polyacrylamide or polyvinyl alcohol,), a thermosetting agent (such as a melamine resin, a urethane resin, a triazine ring-containing compound or an isocyanate-type compound), an epoxy curing agent (such as isophthalic acid dihydrazide, adipic acid dihydrazide, dodecanedioic acid dihydrazide, 1,6-hexamethylenebis(N,N-dimethylsemicarbazide) or 1,1,1',1'-tetramethyl-4,4'-(methylene-di-p-phenylene) disemicarbazide or spiroglycol), a thermosetting catalyst, a crosslinking catalyst, a synthetic resin, a fiber-stabilizer or inorganic fine particles.
Further, the water/oil repellent composition of the present invention may contain a copolymer capable of exhibiting water repellency and/or oil repellency (e.g. a commercially available water repellent, a commercially available

oil repellent, a commercially available water/oil repellent or a commercially available SR (soil release) agent) other than the copolymer (A) or a water-repellent compound having no fluorine atom, as the case requires. The water-repellent compound having no fluorine atom may, for example, be a paraffin type compound, an aliphatic amide type compound, an alkylethylene urea compound or a silicone compound.

(Method for producing water/oil repellent composition)

The water/oil repellent composition of the present invention is produced by the following method (i) or (ii):

(i) A method which comprises polymerizing a monomer mixture comprising the monomer (a) and the monomer (b) and further containing monomers (c) to (f) as the case requires, in a medium in the presence of a surfactant and a polymerization initiator to obtain a solution, dispersion or emulsion of the copolymer (A), and adding another medium, another surfactant and additives, as the case requires.

(ii) A method which comprises polymerizing a monomer mixture comprising the monomer (a) and the monomer (b) and further containing monomers (c) to (f) as the case requires, in a medium in the presence of a surfactant and a polymerization initiator, to obtain a solution, dispersion or emulsion of a copolymer (A), then separating the copolymer (A) and adding a medium, a surfactant and, if required, additives, to the copolymer (A).

The polymerization method may, for example, be a dispersion polymerization method, an emulsion polymerization method or a suspension polymerization method, and emulsion polymerization is preferred. Further, it may be polymerization all at once or multistage polymerization.

The method for producing a water/oil repellent composition is preferably a method wherein a monomer mixture comprising the monomer (a) and the monomer (b) and further containing monomers (c) to (f) as the case requires, is polymerized by emulsion polymerization in the presence of a surfactant and a polymerization initiator to obtain an emulsion of the copolymer (A).

With a view to improving the yield of the copolymer, it is preferred to pre-emulsify the mixture comprising the monomers, the surfactant and the aqueous medium, prior to the emulsion polymerization. For example the mixture comprising the monomers, the surfactant and the aqueous medium is mixed and dispersed by a homomixer or a high pressure emulsifier.

The polymerization initiator may, for example, be a thermal polymerization initiator, a photopolymerization initiator, a radiation polymerization initiator, a radical polymerization initiator or an ionic polymerization initiator, and a water-soluble or oil-soluble radical polymerization initiator is preferred.

As the radical polymerization initiator, a common initiator such as an azo type polymerization initiator, a peroxide type polymerization initiator or a redox type initiator is employed depending upon the polymerization temperature. As the radical polymerization initiator, an azo type compound is particularly preferred, and in a case where polymerization is carried out in an aqueous medium, a salt of an azo type compound is more preferred. The polymerization temperature is preferably from 20 to 150°C.

The amount of the polymerization initiator is preferably from 0.1 to 5 parts by mass, more preferably from 0.1 to 3 parts by mass, per 100 parts by mass of the monomer mixture.

At the time of polymerization of the monomer mixture, a molecular weight-controlling agent may be employed. The molecular weight controlling agent is preferably an aromatic compound, a mercapto alcohol or a mercaptan, particularly preferably an alkylmercaptan. The molecular weight-controlling agent may, for example, be mercaptoethanol, n-octylmercaptan, n-dodecylmercaptan, t-dodecylmercaptan, stearylmercaptan or α-methylstyrene dimer ($CH_2=C(Ph)CH_2C(CH_3)_2Ph$ wherein Ph is a phenyl group).

The amount of the molecular weight-controlling agent is preferably from 0.01 to 5 parts by mass, more preferably from 0.1 to 3 parts by mass, per 100 parts by mass of the monomer mixture.

Otherwise, the monomer mixture may be polymerized in the presence of a polyfunctional mercapto compound such as diethylene glycol bis(3-mercaptobutyrate), pentaerythritol tetrakis(3-mercaptobutyrate), 2,4,6-trimercaptotriazine or 1,3,5-tris(3-mercaptobutyloxyethyl)-1,3,5-triazine-2,4,6(1 H,3H,5H)-trione.

The molar ratio of the monomer (a) to the monomer (b) (i.e. (a)/(b)) is at least 1, preferably at least 1.2, particularly preferably at least 1.5. When the ratio is at least 1, both the dynamic water repellency and the post-air-drying water repellency will be satisfied.

From the viewpoint of the dynamic water repellency and the post-air-drying water repellency, the proportion of the monomer (a) is preferably from 5 to 60 mass%, more preferably from 5 to 50 mass%, particularly preferably from 5 to 40 mass%, based on the monomer mixture (100 mass%).

From the viewpoint of the dynamic water repellency and the post-air-drying water repellency, the proportion of the monomer (b) is preferably from 0.1 to 30 mass%, more preferably from 0.1 to 25 mass%, particularly preferably from 0.5 to 20 mass%, based on the monomer mixture (100 mass%).

From such a viewpoint that the hydrophobicity of the copolymer (A) is improved, and a superior durable water repellency can be obtained, the proportion of the monomer (c) is preferably more than 0 mass%, more preferably from 1 to 95 mass%, further preferably from 5 to 80 mass%, particularly preferably from 10 to 70 mass%, based on the monomer mixture (100 mass%).

The proportion of the monomer (d) is preferably from 0 to 80 mass%, based on the monomer mixture (100 mass%), and from the viewpoint of the dynamic water repellency and the post-air-drying water repellency, it is more preferably from 5 to 80 mass%, particularly preferably from 10 to 70 mass%.

The proportion of the monomer (e) is preferably from 0 to 20 mass% based on the monomer mixture (100 mass%), and from the viewpoint of the abrasion durability, it is more preferably from 0.1 to 15 mass%, particularly preferably from 0.5 to 10 mass%.

The proportion of the monomer (f) is preferably from 0 to 30 mass%, more preferably from 0 to 20 mass%, based on the monomer mixture (100 mass%).

In a case where the proportion of the monomer (a) is at least 30 mass%, the mass ratio of the proportion of the monomer (c)/the proportion of the monomer (b) is preferably from 0 to 2, more preferably from 0 to 1.

In a case where the proportion of the monomer (a) is less than 30 mass%, the mass ratio of the proportion of the monomer (c)/the proportion of the monomer (b) is preferably more than 0.05 and at most 30, more preferably more than 0.1 and at most 25.

In the water/oil repellency composition of the present invention, it is preferred that the copolymer (A) is dispersed in the form of particles in the medium. The average particle size of the copolymer (A) is preferably from 10 to 1,000 nm, more preferably from 10 to 300 nm, particularly preferably from 10 to 250 nm. When the average particle size is within such a range, it will be unnecessary to use a surfactant, a dispersant, etc. in a large amount, the water repellency will be good, and when a dyed cloths are treated, no color fading will result, and the dispersed particles can stably be present in the medium without precipitation. The average particle size of the copolymer (A) can be measured by e.g. a dynamic light-scattering apparatus or an electron microscope.

Immediately after the production of the water/oil repellent composition, the solid content concentration of the emulsion is preferably from 20 to 40 mass% based on the emulsion (100 mass%). Here, the solid content concentration is a concentration including an emulsifier in addition to the copolymer (A). The content of the copolymer (A) in the emulsion is preferably from 18 to 40 mass% immediately after the production of the water/oil repellency composition.

At the time of treating an article, the solid content concentration of the water/oil repellency composition of the present invention is preferably from 0.2 to 5 mass% in the water/oil repellent composition (100 mass%).

The solid content concentration of the emulsion or the water/oil repellent composition is calculated from the mass of the emulsion or the water/oil repellent composition before heating and the mass after drying for 4 hours by a counter current canal dryer at 120°C.

The water/oil repellent composition of the present invention as described in the foregoing, contains the copolymer (A) which has structural units based on the monomer (a) and structural units based on the monomer (b) and which has a large proportion of the structural units based on the monomer (a), whereby it is possible to impart sufficient dynamic water repellency and post-air-drying water repellency to the surface of an article.

Further, by the water/oil repellent composition of the present invention, the content (content in a case where the solid content concentration is 20%) of perfluorooctanoic acid (PFOA) and perfluorooctanesulfonic acid (PFOS), and their precursors and analogs, can be reduced to a level of not higher than the detection limit as an analytical value of LC-MS/MS (high performance liquid chromatography mass analyzer) by the method disclosed in Japanese Patent Application No. 2007-333564, in a case where the copolymer has no structural units based on the monomer (c) or in a case where the compound (1) is used as the monomer (c) or even in a case where the monomer has a $R^F$ group having at least 8 carbon atoms, when the purification degree of the copolymer (A) and the conversion in the polymerization reaction are very high.

<Articles>

The water/oil repellent composition of the present invention is useful for water/oil repellent treatment of articles.

Articles to be treated by the water/oil repellent composition of the present invention include, for example, fibers (natural fibers, synthetic fibers, mixed fibers, etc.), various fiber products, nonwoven fabrics, resins, paper, leather, metals, stones, concrete, gypsum and glass.

The treating method may, for example, be a method of coating or impregnating an article with the water/oil repellent composition by a known coating method, followed by drying.

Further, antistatic finish, softening finish, antibacterial finish, deodorant finish or waterproofing finish may, for example, be carried out.

The waterproofing finish may be processing to provide a waterproofing film. The waterproofing film may, for example, be a porous film made of an urethane resin or an acrylic resin, a non-porous film made of an urethane resin

or an acrylic resin, a polytetrafluoroethylene film or a moisture-proofing film made of a combination thereof.

By treating an article by means of the water/oil repellent composition of the present invention, it is possible to impart high quality water/oil repellency to the article. Further, it is possible to impart excellent adhesion to the substrate surface and to impart the water/oil repellency even by curing at a low temperature. Further, it is possible to maintain the performance at the initial stage of the processing stably without substantial deterioration of the performance by abrasion or washing. Further, when paper is treated, it is possible to impart an excellent sizing property and water/oil repellency to the paper even under a low temperature drying condition. In a case where it is applied to the surface of a resin, glass or a metal, it is possible to form a water/oil repellent coating film which is excellent in the adhesion to the article and which is excellent in the film-forming property.

## EXAMPLES

Now, the present invention will be described in detail with reference to Examples, but it should be understood that the present invention is by no means thereby restricted.

Examples 2, 3, 5 to 7, 9 to 12 and 15 to 22 are Working Examples of the present invention, and Examples 1, 4, 8, 14 and 23 are Comparative Examples. Example 13 is a Reference Example.

<Physical properties of copolymer>

With respect to a copolymer recovered by the following recovery method, its molecular weight was measured.

(Recovery method)

6 g of an emulsion obtained in each of the following Examples 1 to 23 was dropped into 60 g of 2-propanol (hereinafter referred to as IPA), followed by stirring to precipitate solid. After carrying out centrifugal separation at 3,000 rpm for 5 minutes, the obtained solid was decanted. 12 g of IPA was again added, followed by thorough stirring. After carrying out centrifugal separation at 3,000 rpm for 5 minutes, the obtained solid was separated from the supernatant, followed by vacuum drying at 35°C overnight to obtain a copolymer.

(Molecular weight)

The recovered copolymer was made into a 0.5 mass% THF solution, which was passed through a 0.45 μm filter to obtain a sample for analysis. With respect to the sample, the number average molecular weight (Mn) and the mass average molecular weight (Mw) were measured. The conditions for the measurement were as follows.

Apparatus: HLC-8220GPC manufactured by TOSOH CORPORATION
Column: One having four types of TSKgel super HZ4000, super HZ3000, super HZ2500 and super HZ 2000 connected in series.
Measuring temperature: 40°C
Injected amount: 40 μL
Outflow rate: 0.35 mL/min
Eluent: THF
Standard sample: EasiCal PS-2 manufactured by Polymer Laboratories

<Evaluation of test cloth>

(Water repellency)

With respect to a test cloth, the water repellency was evaluated in accordance with the spray test in JIS L1092-1992. The water repellency is represented by five grades of from 1 to 5. Here, the higher the grade number, the better the water repellency. One with grade 3 or higher is regarded as exhibiting water repellency. A grade having +(-) attached shows that the property is slightly better (worse) than the standard property of that grade.

(Washing durability)

With respect to a test cloth, washing was repeated 20 times in accordance with the water washing method in JIS L0217 Appendix 103. After the washing, it was dried in air overnight in a room having a room temperature of 25°C under a humidity of 60%, whereupon the water repellency was evaluated as described above.

(Oil repellency)

With respect to a test cloth, the oil repellency was evaluated in accordance with the test method in AATCC-TM118-1966. The oil repellency is represented by grades shown in Table 1. A grade having +(-) attached, shows that the property is slightly better (worse) than the standard property of that grade.

TABLE 1

| Oil repellency No. | Test solution | Surface tension Surface tension |
|---|---|---|
| | | mN/m (25°C) |
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-Hexadecane | 27.3 |
| 2 | 65 Parts of nujol/<br>35 parts of hexadecane | 29.6 |
| 1 | Nujol | 31.2 |
| 0 | Less than 1 | - |

(Dynamic water repellency)

With respect to a test cloth, in accordance with the method (Bundesmann test) disclosed in JIS L1092 method (C), a rainfall test was carried out under such conditions that the amount of rainfall was 100 cc/min, the water temperature of rainfall was 20°C and the time for rainfall was 10 minutes, whereby the water repellency was evaluated. The water repellency was represented by five grades of from 1 to 5. Here, the larger the grade number, the better the water repellency. One with grade 3 or higher is regarded as exhibiting water repellency. A grade having +(-) attached, shows that the property is slightly better (worse).

(Washing durability)

With respect to a test cloth, washing was repeated five times or 20 times in accordance with the water washing method in JIS L0217 Appendix 103. After the washing, it was dried in air in a room at a room temperature of 25°C under a humidity of 50%, and then, the dynamic water repellency was evaluated as described above.

(Mechanical stability)

250 g of a water/oil repellent composition was heated to 30°C in a warm bath and stirred at 3,000 rpm for 5 minutes by means of a homomixer (Biomixer manufactured by NIHONSEIKI KAISHA LTD.), followed by filtration by a brown doeskin cloth. A trace remaining on the surface of the doeskin cloth was observed. One having no trace was regarded as 5 points, and the evaluation was carried out in five grades down to 1 point. Here, the lower the point, the worse the mechanical stability.

(Foreign substance stability)

In 250 g of a water/oil repellent composition, Sumikaron Red SE-RPD (manufactured by Sumika Chemtex Co., Ltd., in Table: Disperse dye R) was added so that the concentration became 0.05 g/L. This liquid was heated to 30°C in a warm bath and stirred at 3,000 rpm for 5 minutes by means of a homomixer (Biomixer manufactured by NIHONSEIKI KAISHA LTD.), followed by filtration by a brown doeskin cloth. A trace remaining on the surface of the doeskin cloth was observed. One having no trace was regarded as 5 points, and the evaluation was carried out in five grades down to 1 point. Here, the lower the point, the worse the foreign substance stability.

A foreign matter stability was evaluated in the same manner by changing Sumikaron Red SE-RPD to Nylosan

Blue N-BLN (manufactured by Clariant, in Table, Acid dye B).

(Abbreviations)

Monomer (a):
VCM: Vinyl chloride
Monomer (b):
HBVE: 4-Hydroxybutyl vinyl ether
Monomer (c):

CmFA: $F(CF_2)_mCH_2CH_2OC(O)CH=CH_2$ (A mixture of ones wherein m is from 6 to 16, ones wherein m is at least 8 are 99 mass%, and the average value of m is 9.)
C6FMA: $C_6F_{13}C_2H_4OC(O)C(CH_3)=CH_2$.

Monomer (a):

BeA: Behenyl acrylate
STA: Stearyl acrylate

Monomer (d):

HEMA: 2-Hydroxyethyl methacrylate
D-BI: 3,5-Dimethylpyrazole adduct of 2-isocyanate ethyl methacrylate (the following formula (5))
NMAM: N-methylolacrylamide

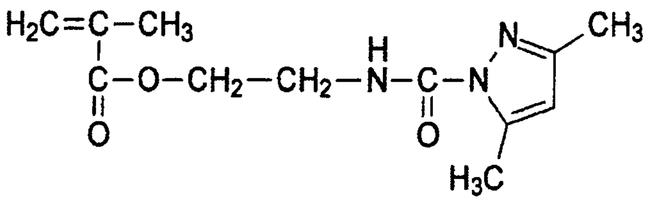
(5)

Monomer (f):

VdCl: Vinylidene chloride
DOM: Dioctyl maleate

Surfactant $s^1$:

PEO-20: 10 Mass% aqueous solution of polyoxyethylene oleyl ether (Emulgen E430 manufactured by Kao Corporation, about 26 mol adduct of ethylene oxide)

SFY465: 10 Mass% aqueous solution of 2,4,7,9-tetramethyl-5-decyn-4,7-diolethylene oxide adduct (Surfynol 465 manufactured by Nissin Chemical Industry Co., Ltd., added mols of ethylene oxide: 10)

Surfactant $s^7$:
TMAC: 10 Mass% aqueous solution of trimethylammonium chloride (ARQUAD 18-63 manufactured by Lion Corporation)
Surfactant $s^3$:
P-204: 10 Mass% aqueous solution of ethylene oxide propylene oxide polymer (PRONONE 204 manufactured by NOF Corporation, proportion of ethylene oxide: 40 mass%)
Molecular weight-controlling agent:
nDOSH: n-Dodecylmercaptan

Polymerization initiator:
VA-061 A: 10 Mass% aqueous solution of an acetate of 2,2'-azobis[2-(2-imidazolin-2-yl)propane] (VA-061 manufactured by Wako Pure Chemical Industries, Ltd.)
Medium:

DPG: Dipropylene glycol
BD: 1,4-Butanediol
Water: Deionized water

EXAMPLE 1

Into a glass beaker, 121.93 g of BeA, 16.10 g of HBVE, 2.30 g of nDOSH, 57.52 g of PEO-20, 11.50 g of SFY465, 11.50 g of TMAC, 69.02 g of DPG and 356.60 g of water were introduced, then heated at 60°C for 30 minutes and mixed by means of a homomixer (Biomixer manufactured by NIHONSEIKI KAISHA LTD.) to obtain a mixed liquid.
The obtained mixed liquid was treated at 40 MPa by means of a high pressure emulsifying machine (Mini-Lab manufactured by APV Rannie) while maintaining the temperature at 60°C to obtain an emulsified liquid. The obtained emulsified liquid was put into a stainless steel reactor and cooled to a temperature of at most 40°C. Then, 10.74 g of VA-061A was added, and the vapor phase was substituted by nitrogen. Then, 85.89 g of VCM was introduced, and a polymerization reaction was carried out at 60°C for 15 hours with stirring, to obtain an emulsion of a copolymer. The proportions of structural units based on the respective monomers are shown in Table 4. EXAMPLES 2 to 22
Emulsions of copolymers were obtained in the same manner as in Example 1 except that the charged amounts of the respectively raw materials were changed to the amounts shown in Tables 2 and 3. The proportions of structural units based on the respective monomers are shown in Tables 4 and 5.
With respect to the copolymers in Examples 16 and 19, the molecular weights were measured. The recovery rates and the molecular weights of the copolymers are shown in Table 6.

EXAMPLE 23

Into a glass beaker, 184.05 g of C6FMA, 2.30 g of HEMA, 2.30 g of nDOSH, 57.52 g of PEO-20, 11.50 g of SFY465, 11.50 g of TMAC, 69.02 g of DPG and 356.60 g of water were introduced, then heated at 55°C for 30 minutes and mixed by means of a homomixer (Biomixer manufactured by NIHONSEIKI KAISHA LTD.) to obtain a mixed liquid.
The obtained mixed liquid was treated at 40 MPa by means of a high pressure emulsifying machine (Mini-Lab manufactured by APV Rannie) while maintaining the temperature at 50°C, to obtain an emulsified liquid. The obtained emulsified liquid was introduced into a glass reactor and cooled to a temperature of at most 30°C. Then, 40.80 g of VdCl and 10.74 g of VA-061A were added, and after replacing the vapor phase by nitrogen, a polymerization reaction was carried out at 65°C for 15 hours with stirring to obtain an emulsion of a copolymer. The proportions of structural units based on the respective monomers are shown in Table 5.

TABLE 2

| Charge (g) | | Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| (c) | CmFA | | | | | | | | | | | |
| (c) | C6FMA | | 40.26 | 81.67 | | 41.41 | 83.97 | 126.53 | | 63.73 | 95.48 | 127.22 |
| (d) | BeA | 121.93 | 81.67 | 40.26 | 167.94 | 26.53 | 83.97 | 41.41 | 190.95 | 127.22 | 95.48 | 63.73 |
| (d) | STA | | | | | | | | | | | |
| (a) | VCM | 85.89 | 85.89 | 85.89 | 42.94 | 42.94 | 42.94 | 42.94 | 21.47 | 21.47 | 21.47 | 21.47 |
| (f) | VdCl | | | | | | | | | | | |
| (b) | HBVE | 16.1 | 16.1 | 16.1 | 16.1 | 16.1 | 16.1 | 16.1 | 16.1 | 16.1 | 16.1 | 16.1 |
| (e) | HEMA | | | | | | | | | | | |
| (e) | D-BI | | | | | | | | | | | |
| (f) | DOM | | | | | | | | | | | |
| (e) | NMAM | | | | | | | | | | | |
| $s^1$ | PEO-20 | 57.52 | 57.52 | 57.52 | 57.52 | 57.52 | 57.52 | 57.52 | 57.52 | 57.52 | 57.52 | 57.52 |
| $s^1$ | SFY465 | 11.5 | 11.5 | 11.5 | 11.5 | 11.5 | 11.5 | 11.5 | 11.5 | 11.5 | 11.5 | 11.5 |
| $s^7$ | TMAC | 11.5 | 11.5 | 11.5 | 11.5 | 11.5 | 11.5 | 11.5 | 11.5 | 11.5 | 11.5 | 11.5 |
| $s^3$ | P-204 | | | | | | | | | | | |
| - | nDOSH | 2.3 | 2.3 | 2.3 | 2.3 | 2.3 | 2.3 | 2.3 | 2.3 | 2.3 | 2.3 | 2.3 |
| - | VA-061A | 10.74 | 10.74 | 10.74 | 10.74 | 10.74 | 10.74 | 10.74 | 10.74 | 10.74 | 10.74 | 10.74 |
| - | DPG | 69.02 | 69.02 | 69.02 | 69.02 | 69.02 | 69.02 | 69.02 | 69.02 | 69.02 | 69.02 | 69.02 |
| | BD | | | | | | | | | | | |
| - | Water | 356.6 | 356.6 | 356.6 | 356.6 | 356.6 | 356.6 | 356.6 | 356.6 | 356.6 | 356.6 | 356.6 |
| Solid content (mass%) | | 31.g | 31.8 | 31.6 | 31.2 | 31.8 | 31.6 | 31.9 | 31.8 | 30.6 | 31.2 | 31.8 |

TABLE 3

| Charge (g) | | Examples | | | | | | | | | | | |
|---|---|---|---|---|---|---|---|---|---|---|---|---|---|
| | | 12 | 13 | 14 | 15 | 16 | 17 | 18 | 19 | 20 | 21 | 22 | 23 |
| (c) | CmFA | | 152.17 | | | | | | | | | | |
| (c) | C6FMA | 190.95 | | 160.87 | 39.11 | 40.95 | 39.11 | 39.11 | 38.06 | 37.96 | 22.83 | 36.81 | 184.05 |
| (d) | BeA | | | | 140.34 | 138.5 | 138.04 | 132.09 | 133.44 | 79.57 | 129.98 | 128.83 | |
| (d) | STA | | | 29.91 | | | | | | | | | |
| (a) | VCM | 21.47 | 42.61 | 19.33 | 45.09 | 42.94 | 42.94 | 42.94 | 42.94 | 25.83 | 42.94 | 40.8 | |
| (f) | VdCl | | | | | | | | | | | | 40.8 |
| (b) | HBVE | 16.1 | | | 2.3 | 2.3 | 6.9 | 6.72 | 11.5 | 6.92 | 16.1 | 20.71 | |
| (e) | HEMA | | | | | 2.3 | | 2.3 | | 1.38 | | | 2.3 |
| (e) | D-BI | | | 9.2 | | | | | | | | | |
| (f) | DOM | | 13.7 | | | | | | | | | | |
| (e) | NMAM | | 5.87 | | | | | | | | | | |
| $s^1$ | PEO-20 | 57.52 | 78.26 | 57.52 | 57.52 | 57.52 | 57.52 | 57.52 | 57.52 | 57.52 | 57.52 | 57.52 | 57.52 |
| $s^1$ | SFY465 | 11.5 | 17.39 | 11.5 | 11.5 | 11.5 | 11.5 | 11.5 | 11.5 | 11.5 | 11.5 | 11.5 | 11.5 |
| $s^7$ | TMAC | 11.5 | | 11.5 | 11.5 | 11.5 | 11.5 | 11.5 | 11.5 | 11.5 | 11.5 | 11.5 | 11.5 |
| $s^3$ | P-204 | | 21.73 | | | | | | | | | | |
| - | nDOSH | 2.3 | 2.3 | 2.3 | 2.3 | 2.3 | 2.3 | 2.3 | 2.3 | 2.3 | 2.3 | 2.3 | 2.3 |
| - | VA-061A | 10.74 | 10.74 | 10.74 | 10.74 | 10.74 | 10.74 | 10.74 | 10.74 | 10.74 | 10.74 | 10.74 | 10.74 |
| - | DPG | 69.02 | 69.02 | 69.02 | 69.02 | 69.02 | 69.02 | 69.02 | 69.02 | 63.48 | 69.02 | 69.02 | 69.02 |
| | BD | | | | | | | | | 5.54 | | | |
| - | Water | 356.6 | 356.6 | 356.6 | 356.6 | 356.6 | 356.6 | 356.6 | 356.6 | 356.6 | 356.6 | 356.6 | 356.6 |
| Solid content (mass%) | | 31.9 | 31.9 | 31.8 | 31.7 | 31.7 | 31.9 | 31.9 | 31.8 | 31.8 | 31.7 | 31.7 | 31.8 |

TABLE 4

| Structural units (mass%) | | Examples | | | | | | | | | | |
|---|---|---|---|---|---|---|---|---|---|---|---|---|
| | | 1 | 2 | 3 | 4 | 5 | 6 | 7 | 8 | 9 | 10 | 11 1 |
| (c) | CmFA | | | | | | | | | | | |
| (c) | C6FMA | | 17.5 | 35.5 | | 18 | 36.5 | 55 | | 27.7 | 41.5 | 55.3 |
| (d) | BeA | 53 | 35.5 | 17.5 | 73 | 55 | 36.5 | 18 | 83 | 55.3 | 41.5 | 27.7 |
| (d) | STA | | | | | | | | | | | |
| (a) | VCM | 40 | 40 | 40 | 20 | 20 | 20 | 20 | 10 | 10 | 10 | 10 |
| (f) | VdCl | | | | | | | | | | | |
| (b) | HBVE | 7 | 7 | 7 | 7 | 7 | 7 | 7 | 7 | 7 | 7 | 7 |
| (e) | HEMA | | | | | | | | | | | |
| (e) | D-BI | | | | | | | | | | | |
| (f) | DOM | | | | | | | | | | | |
| (e) | NMAM | | | | | | | | | | | |
| Molar ratio of (a)/(b) ratio of | | 10.7 | 10.7 | 10.7 | 5.3 | 5.3 | 5.3 | 5.3 | 2.7 | 2.7 | 2.7 | 2.7 |

TABLE 5

| Structural units (mass%) | | Examples | | | | | | | | | | | |
|---|---|---|---|---|---|---|---|---|---|---|---|---|---|
| | | 12 | 13 | 14 | 15 | 16 | 17 | 18 | 19 | 20 | 21 | 22 | 23 |
| (c) | CmFA | | 70 | | | | | | | | | | |
| (c) | C6FMA | 83 | | 74 | 17 | 17.8 | 17 | 17 | 17 | 16.5 | 16.5 | 16 | 80 |
| (d) | BeA | | | | 61 | 60.2 | 60 | 59 | 58 | 57.5 | 56.5 | 56 | |
| (d) | STA | | | 13 | | | | | | | | | |
| (a) | VCM | 10 | 21 | 9 | 21 | 20 | 20 | 20 | 20 | 20 | 20 | 19 | |
| (f) | VdCl | | | | | | | | | | | | 19 |
| (b) | HBVE | 7 | | | 1 | 1 | 3 | 3 | 5 | 5 | 7 | 9 | |
| (e) | HEMA | | | | | 1 | | 1 | | 1 | | | 1 |
| (e) | D-BI | | | 4 | | | | | | | | | |
| (f) | DOM | | 6.3 | | | | | | | | | | |
| (e) | NMAM | | 2.7 | | | | | | | | | | |
| molar ratio of (a)/(b) | | 2.7 | - | - | 39.3 | 37.4 | 12.5 | 18.7 | 7.5 | 7.5 | 5.3 | 3.9 | - |

TABLE 6

| | Recovery rate (%) | Molecular weights | | |
|---|---|---|---|---|
| | | Mn | Mw | Mw/Mn |
| Example 16 | 90 | $1.6\times10^4$ | $8.1\times10^4$ | 5.1 |
| Example 19 | 92 | $1.5\times10^4$ | $6.6\times10^4$ | 4.3 |

<Evaluation of test cloth>

The emulsion of a copolymer in each of Examples 1 to 23 was diluted with distilled water to adjust the solid content concentration to be 1.0 mass%, and then a trimethylolmelamine resin (BECKAMINE M-3 manufactured by DIC Corporation) as a thermosetting agent and an organic amine salt catalyst (Catalyst ACX manufactured by DIC Corporation) as a thermosetting catalyst were added so that the respective concentrations became 0.3 mass%, and further, a blocked isocyanate (Meikanate TP-10 manufactured Meisei Chemical Works, Ltd.) as an adjuvant for combined use was added so that the concentration became 0.75 mass%, to obtain a water/oil repellent composition.

In the water/oil repellent composition, a dyed nylon cloth or a dyed polyester cloth was dipped and squeezed so that the wet pickup became 42 mass% or 95 mass%. The wet cloth was dried at 110°C for 90 seconds and then dried at 170°C for 60 seconds to obtain a test cloth. With respect to the test cloth, the water repellency (post-air-drying water repellency), the oil repellency and the dynamic water repellency were evaluated. The results are shown in Tables 7 and 8. With respect to the water/oil repellent composition in Example 19, the mechanical stability and the foreign matter stability were also evaluated. The results are shown in Table 9.

TABLE 7

| Base cloth | Nylon | | | | | |
|---|---|---|---|---|---|---|
| Evaluation | Oil repellency | Water repellency | | Bundesmann test | | |
| Washing times | - | - | 20 | - | 5 | 20 |
| Ex. 2 | 2 | 5 | 3 | 4+ | 3+ | 3 |
| Ex. 3 | 3- | 5- | 3+ | 3- | 2+ | 2 |
| Ex. 4 | 0 | 5 | 2+ | 3 | 2+ | 1.5 |
| Ex. 5 | 2 | 5 | 4+ | 4.5 | 4+ | 4 |
| Ex. 6 | 4- | 5- | 4+ | 3 | 3+ | 3 |
| Ex. 7 | 4 | 5 | 5- | 3+ | 3+ | 3- |
| Ex. 8 | 0 | 5 | 2- | 3- | 2- | 1 + |
| Ex. 9 | 4 | 5 | 3+ | 3+ | 3 | 3- |
| Ex. 10 | 5- | 5 | 4- | 4 | 3 | 3- |
| Ex. 11 | 6- | 5 | 4- | 4 | 3+ | 3 |
| Ex. 12 | 6- | 5 | 3+ | 4- | 2 | 2 |
| Ex. 13 | 6 | 5 | 3 | 5 | 4- | 3+ |
| Ex. 14 | 6- | 5 | 3 | 3+ | 1.5 | 1 + |
| Ex. 15 | 2 | 5- | 3+ | 4.5 | 3.5 | 3.5 |
| Ex. 16 | 2 | 5 | 4- | 5- | 3.5 | 3.5 |
| Ex. 17 | 2 | 5 | 3 | 4.5 | 3.5 | 3.5 |
| Ex.18 | 4 | 5 | 4+ | 5 | 4.5 | 4 |
| Ex. 19 | 2 | 5 | 4- | 5- | 3.5 | 3.5 |
| Ex. 20 | 4 | 5 | 4- | 5 | 4.5 | 4- |
| Ex. 21 | 4 | 5 | 5- | 5 | 4.5 | 4- |
| Ex. 22 | 4 | 5 | 4+ | 5 | 4.5 | 3.5 |

TABLE 8

| Base cloth | Polyester | | | | | |
|---|---|---|---|---|---|---|
| Evaluation | Oil repellency | Water repellency | | Bundesmann test | | |
| Washing times | - | - | 20 | - | 5 | 20 |
| Ex. 13 | 6 | 5 | 5- | 5 | 4+ | 4 |
| Ex. 14 | 4 | 5 | 3+ | 1.5 | 1 | 1 |
| Ex. 23 | 5 | 5 | 5- | 5- | 1+ | 1 |
| Ex. 15 | 4 | 5 | 5- | 5- | 3+ | 3- |
| Ex. 16 | 4 | 5 | 5- | 5 | 4- | 3- |
| Ex. 17 | 4 | 5 | 5- | 5- | 4- | 3- |
| Ex. 19 | 4 | 5 | 5- | 5 | 4- | 3- |

TABLE 9

| | Mechanical stability | Foreign matter stability | |
|---|---|---|---|
| | | Acid B | Disperse 2 dye R |
| Example 19 | 4.5 | dye 3.5 | 2 |

INDUSTRIAL APPLICABILITY

The water/oil repellent composition of the present invention is useful as a water/oil repellent agent for e.g. fiber products (clothing (sports wears, coats, jumpers, work clothes, uniforms, etc.), bags, industrial materials, etc.), nonwoven fabrics, leather products, stone materials, concrete building materials, etc. Further, it is useful as a coating agent for filtration material or as a surface protective agent. Further, it is useful also for an application wherein it is mixed with e.g. polypropylene or nylon, followed by molding or forming into fibers to impart water/oil repellency.

The entire disclosure of Japanese Patent Application No. 2008-274756 filed on October 24, 2008 including specification, claims and summary is incorporated herein by reference in its entirety.

## Claims

1. A water/oil repellent composition which comprises a copolymer having structural units based on the following monomer (a), structural units based on the following monomer (b) and structural units based on the following monomer (c), and a medium, wherein the molar ratio of the structural units based on the monomer (a) to the structural units based on the monomer (b) (i.e. (a)/(b)) is at least 1:

   monomer (a): vinyl chloride;
   monomer (b): a vinyl ether having no polyfluoroalkyl group and having a crosslinkable functional group; and
   monomer (c): a monomer having a polyfluoroalkyl group.

2. The water/oil repellent composition according to Claim 1, wherein the monomer (c) is a compound represented by the following formula (1):

   $$(Z\text{-}Y)_nX \qquad (1)$$

   wherein Z is a $C_{1-6}$ polyfluoroalkyl group or a group represented by the following formula (2), Y is a bivalent organic group or a single bond, n is 1 or 2, and X is ,when n is 1, any one of the groups represented by the following formulae (3-1) to (3-5) and ,when n is 2, any one of the groups represented by the following formulae (4-1) to (4-4):

   $$C_iF_{2i+1}O(CFX^1CF_2O)_jCFX^2\text{-} \qquad (2)$$

wherein i is an integer of from 1 to 6, j is an integer of 0 to 10, and each of $X^1$ and $X^2$ which are independent of each other is a fluorine atom or a trifluoromethyl group;

$-CR=CH_2$ (3-1)

$-C(O)OCR=CH_2$ (3-2)

$-OC(O)CR=CH_2$ (3-3)

$-OCH_2-\phi-CR=CH_2$ (3-4)

$-OCH=CH_2$ (3-5)

wherein R is a hydrogen atom, a methyl group or a halogen atom, and $\phi$ is a phenylene group;

$-CH[-(CH_2)_mCR=CH_2]-$ (4-1)

$-CH[-(CH_2)_mC(O)OCR=CH_2]-$ (4-2)

$-CH[-(CH_2)_mOC(O)CR=CH_2]-$ (4-3)

$-OC(O)CH=CHC(O)O-$ (4-4)

where R is a hydrogen atom, a methyl group or a halogen atom, and m is an integer of from 0 to 4.

**3.** The water/oil repellent composition according to Claim 1 or 2, wherein the monomer (c) is a (meth)acrylate having a $C_{4-6}$ perfluoroalkyl group.

**4.** The water/oil repellent composition according to any one of Claims 1 to 3, wherein the crosslinkable functional group in the monomer (b) is a hydroxy group, an epoxy group or an amino group.

**5.** The water/oil repellent composition according to any one of Claims 1 to 4, wherein the copolymer further has-structural units based on the following monomer (d):

monomer (d): a (meth)acrylate having no polyfluoroalkyl group and having a $C_{12-30}$ alkyl group.

**6.** The water/oil repellent composition according to any one of Claims 1 to 5, wherein the copolymer further has structural units based on the following monomer (e):

monomer (e): a monomer having no polyfluoroalkyl group and having a crosslinkable functional group (provided that the monomer (b) is excluded).

**7.** A method for producing a water/oil repellent composition, which comprises polymerizing a monomer mixture comprising the following monomer (a), the following monomer (b) and the following monomer (c) in a medium in the presence of a surfactant and a polymerization initiator, wherein the molar ratio of the monomer (a) to the monomer (b) (i.e. (a)/(b)) is at least 1:

monomer (a): vinyl chloride;
monomer (b): a vinyl ether having no polyfluoroalkyl group and having a crosslinkable functional group; and
monomer (c): a monomer having a polyfluoroalkyl group.

**8.** The method for producing a water/oil repellent composition according to Claim 7, wherein the monomer (c) is a compound represented by the following formula (1):

$(Z-Y)_nX$ (1)

wherein Z is a $C_{1-6}$ polyfluoroalkyl group or a group represented by the following formula (2), Y is a bivalent organic group or a single bond, n is 1 or 2, and X is ,when n is 1, any one of the groups represented by the following formulae

(3-1) to (3-5) and ,when n is 2, any one of the groups represented by the following formulae (4-1) to (4-4):

$$C_iF_{2i+1}O(CFX^1CF_2O)_jCFX^2- \qquad (2)$$

wherein i is an integer of from 1 to 6, j is an integer of 0 to 10, and each of $X^1$ and $X^2$ which are independent of each other is a fluorine atom or a trifluoromethyl group;

$$-CR=CH_2 \qquad (3\text{-}1)$$

$$-C(O)OCR=CH_2 \qquad (3\text{-}2)$$

$$-OC(O)CR=CH_2 \qquad (3\text{-}3)$$

$$-OCH_2\text{-}\phi\text{-}CR=CH_2 \qquad (3\text{-}4)$$

$$-OCH=CH_2 \qquad (3\text{-}5)$$

wherein R is a hydrogen atom, a methyl group or a halogen atom, and $\phi$ is a phenylene group;

$$-CH[-(CH_2)_mCR=CH_2]- \qquad (4\text{-}1)$$

$$-CH[-(CH_2)_mC(O)OCR=CH_2]- \qquad (4\text{-}2)$$

$$-CH[-(CH_2)mOC(O)CR=CH_2]- \qquad (4\text{-}3)$$

$$-OC(O)CH=CHC(O)O- \qquad (4\text{-}4)$$

where R is a hydrogen atom, a methyl group or a halogen atom, and m is an integer of from 0 to 4.

**9.** The method for producing a water/oil repellent composition according to Claim 7 or 8, wherein the monomer (c) is a (meth)acrylate having a $C_{4\text{-}6}$ perfluoroalkyl group.

**10.** The method for producing a water/oil repellent composition according to any one of Claims 7 to 9, wherein the crosslinkable functional group in the monomer (b) is a hydroxy group, an epoxy group or an amino group.

**11.** The method for producing a water/oil repellent composition according to any one of Claims 7 to 10, wherein the monomer mixture further contains the following monomer (d):

monomer (d): a (meth)acrylate having no polyfluoroalkyl group and having a $C_{12\text{-}30}$ alkyl group.

**12.** The method for producing a water/oil repellent composition according to any one of Claims 7 to 11, wherein the monomer mixture further contains the following monomer (e):

monomer (e): a monomer having no polyfluoroalkyl group and having a crosslinkable functional group (provided that the monomer (b) is excluded).

**INTERNATIONAL SEARCH REPORT**

International application No.
PCT/JP2009/067793

A. CLASSIFICATION OF SUBJECT MATTER
*C09K3/18*(2006.01)i, *C08F214/06*(2006.01)i, *C09D127/06*(2006.01)i, *C09D129/10*(2006.01)i, *C09D133/16*(2006.01)i, *D06M15/256*(2006.01)i

According to International Patent Classification (IPC) or to both national classification and IPC

B. FIELDS SEARCHED

Minimum documentation searched (classification system followed by classification symbols)
C09K3/18, C08F214/06, C09D127/06, D06M15/256

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | US 2005/106326 A1 (3M INNOVATIVE PROPERTIES CO.), 19 May 2005 (19.05.2005), paragraphs [0113], [0022], [0033], [0034] & EP 1329548 A1 & WO 2003/062521 A1 & AU 2002357023 A1 & KR 2004-075943 A & BR 200215526 A & CN 1615383 A & MX 2004007025 A1 | 1-12 |
| A | JP 2002-322465 A (Asahi Glass Co., Ltd.), 08 November 2002 (08.11.2002), paragraph [0007] & WO 2002/88272 A1 & EP 1394232 A1 & US 2004/087695 A1 & AU 2002251503 A1 & KR 2004-015150 A & CN 1503833 A | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 January, 2010 (05.01.10) | 19 January, 2010 (19.01.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2009/067793

C (Continuation). DOCUMENTS CONSIDERED TO BE RELEVANT

| Category* | Citation of document, with indication, where appropriate, of the relevant passages | Relevant to claim No. |
|---|---|---|
| A | JP 4-034084 A (Asahi Glass Co., Ltd.), 05 February 1992 (05.02.1992), page 3, lower column (Family: none) | 1-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 002083809 A
- JP 2007333564 A
- JP 2008274756 A